# EUROPÄISCHE PATENTSCHRIFT

(11) **EP 2 715 203 B1**
(45) Veröffentlichungstag und Bekanntmachung des Hinweises auf die Patenterteilung: **17.01.2018**
(21) Anmeldenummer: 12726075.0
(22) Anmeldetag: 29.05.2012
(51) Int. Cl.: B67D 7/32, B67D 7/42, F16L 37/088, F16L 55/10, F16L 27/08

(54) **ABREIßKUPPLUNG FÜR EINE FLÜSSIGKEITSLEITUNG**
BREAKAWAY COUPLING FOR A FLUID LINE
ACCOUPLEMENT SEPARABLE POUR UNE CONDUITE DE LIQUIDE

(30) Priorität: 01.06.2011 EP 11168432
(43) Veröffentlichungstag der Anmeldung: 09.04.2014
(73) Patentinhaber: Elaflex Hiby Tanktechnik GmbH & Co. KG, 22525 Hamburg (DE)
(72) Erfinder: MEYER, Heinz-Ulrich, 22589 Hamburg (DE)
(74) Vertreter: Glawe, Delfs, Moll
(86) Internationale Anmeldenummer: PCT/EP2012/060030
(87) Internationale Veröffentlichungsnummer: WO 2012/163910

(56) Entgegenhaltungen:
- EP-A1- 0 555 558
- EP-A1- 2 133 615
- EP-A1- 2 228 582
- WO-A1-92/08920
- DE-A1-102006 009 528
- DE-B- 1 012 498
- DE-C1- 4 429 498
- US-A- 3 976 100
- US-A- 4 993 460
- US-A- 5 577 538
- US-A- 5 615 706
- US-A1- 2008 157 525

## Beschreibung

Die Erfindung betrifft eine Abreißkupplung für eine Flüssigkeitsleitung gemäß dem Oberbegriff des Anspruchs 1. Gegenstand der Erfindung ist ferner eine Zapfpistole mit einer erfindungsgemäßen Abreißkupplung sowie eine Zapfsäule, die mit einer solchen Zapfpistole ausgerüstet ist.

Beim Betanken von Kraftfahrzeugen wird gelegentlich nach Beendigung des Tankvorgangs vergessen, die Zapfpistole zurück in die Zapfsäule einzuhängen. Fährt das Fahrzeug noch mit im Tank eingehängter Zapfpistole los, sorgt eine in der Regel im Bereich des Anschlussendes der Zapfpistole an den Zapfschlauch vorgesehene Abreißkupplung dafür, dass die Zapfpistole sich definiert an dieser Stelle vom Zapfschlauch trennt und ein Reißen des Zapfschlauchs oder Umreißen der Zapfsäule verhindert wird. Eine solche Abreißkupplung ist beispielsweise aus EP 0 555 558 A1 oder auch aus US 5,615,706 bekannt.

Der vorliegenden Erfindung liegt die Aufgabe zugrunde, eine Abreißkupplung der eingangs genannten Art zu schaffen, die über einen langen Betriebszeitraum eine Trennung mit einer definierten Abreißkraft erlaubt.

Die Erfindung löst diese Aufgabe dadurch, dass eine Verdrehsicherung vorgesehen ist, die im Betrieb der Kupplung ein Verdrehen von erstem und zweitem Kupplungsteil gegeneinander verhindert.

Zunächst seien einige im Rahmen der Erfindung verwendete Begriffe erläutert.

Eine Flüssigkeitsleitung dient dem Transport von Flüssigkeiten. Die Erfindung eignet sich insbesondere für Flüssigkeitsleitungen im Bereich von Tankstellen, Raffinerie- oder Chemieanlagen, weiter bevorzugt für flexible Leitungen (Schläuche), die zum Abfüllen solcher Flüssigkeiten vorgesehen sind. Eine Abreißkupplung ist eine im Betrieb flüssigkeitsdichte Kupplung, die durch das Aufbringen einer definierten Zugkraft und/oder eines definierten Kippmomentes getrennt werden kann. Die Trennung geschieht bevorzugt zerstörungsfrei, sodass die Abreißkupplung nach einem Abriss erneut zusammengefügt und weiter verwendet werden kann.

Die Kupplung weist zwei zusammenfügbare und durch die genannte Kraft trennbare Kupplungsteile auf, die an ihren von den Kupplungsseiten abgewandten Enden jeweils einen Flüssigkeitsanschluss aufweisen. Es kann sich hier beispielsweise um einen Anschluss für Zapfschlauch oder Zapfpistole handeln.

Erfindungsgemäß ist eine Verdrehsicherung vorgesehen, die im Betrieb der Kupplung (also im zusammengefügten Zustand) ein Verdrehen von erstem und zweitem Kupplungsteil gegeneinander verhindert. Der Begriff Verdrehen bezeichnet hierbei eine Rotation von erstem und zweitem Kupplungsteil zueinander um die Kupplungsachse, das heißt die Längs- oder Axialrichtung der Kupplung, in die der Flüssigkeitsstrom erfolgt.

Die Erfindung hat erkannt, dass bei Abreißkupplungen des Standes der Technik im Betrieb häufig ein Verdrehen der beiden Kupplungsteile zueinander erfolgt, die zu einem Einlaufen von Kupplungsteilen in Gegenflächen führen kann und damit die Zugkraft oder das Kippmoment, die bzw. das für eine Trennung der Kupplung erforderlich ist, im Laufe der Zeit verändert, häufig erhöht. Dies ist besonders häufig der Fall bei Zapfsäulen, bei denen im Zuge von Betankungsvorgängen die Zapfpistole regelmäßig relativ zum Zapfschlauch verdreht wird. Zwar ist in aller Regel zwischen Zapfschlauch und Zapfpistole eine unten noch näher beschriebene Gelenk- bzw. Swivelverbindung vorgesehen, um ein freies Verdrehen von der Zapfpistole relativ zum Zapfschlauch zu ermöglichen. Die Erfindung hat jedoch erkannt, dass im Stand der Technik sehr häufig ein Teil der Drehbewegungen von der Abreißkupplung aufgenommen wird und zu einem Verdrehen des ersten Kupplungsteils relativ zum zweiten Kupplungsteil und damit den beschriebenen Einlaufspuren führt.

Erfindungsgemäß sind erstes und zweites Kupplungsteil als ineinandergreifende Male- und Femalekupplungsteile ausgestaltet. Im Stand der Technik müssen Male- und Femalekupplungsteil zum Zusammenfügen in der Regel nur koaxial ausgerichtet werden und können in jedwedem Drehwinkel zueinander (koaxiale Ausrichtung vorausgesetzt) zusammengesetzt werden. Im zusammengefügten Zustand sind sie prinzipiell frei gegeneinander verdrehbar. Erfindungsgemäß ist nun vorgesehen, dass die Kupplungsteile von vornherein entweder nur in einem oder mehreren Winkelstellungen zueinander zusammengefügt werden und im zusammengefügten Zustand in dieser Winkelstellung gehalten werden oder aber im zusammengefügten Zustand eine Verdrehsicherung die einmal eingenommene Winkelstellung der beiden Kupplungsteile zueinander fixiert. Zu diesem Zweck umfasst die Verdrehsicherung ein Sicherungselement, das zwischen erstem und zweitem Kupplungsteil angeordnet ist. Bei ineinandergreifenden Male- und Femalekupplungsteilen handelt es sich erfindungsgemäß um einen in Umfangsrichtung zwischen Male- und Femalekupplungsteil angeordneten Sicherungsring, welcher bevorzugt nicht rotationssymmetrisch ist und durch Formschluss mit erstem und zweitem Kupplungsteil eine Verdrehsicherung bildet. Der Formschluss zwischen Sicherungsring und jedem der beiden Kupplungsteile kann beispielsweise durch im Querschnitt von der Kreisform abweichende Formen wie Abflachungen, ineinandergreifende Nuten und Stege oder dergleichen hergestellt werden.

Erfindungsgemäß wird die eigentliche Funktion der Abreißkupplung, nämlich die Sicherstellung eines Abrisses bei einer definierten Zugkraft bzw. einem Kippmoment, bewirkt durch einen Rastring, der in zugehörige erste und zweite Rastringaufnahmen des ersten und zweiten Kupplungsteils eingreift und durch eine definierte Kraft in Axialrichtung der Kupplung und/oder ein quer zur Axialrichtung wirkendes Kippmoment ausrastbar ist. Es handelt sich hier um ein Wirkprinzip, wie es grundsätzlich in der bereits genannten EP 0 555 558 A1 beschrieben ist. Entweder der Rastring an seiner von der Trennrichtung der Abreißkupplung wegweisenden Seite oder bevorzugt die erste und/oder zweite Rastringaufnahme an ihrer in Trennrichtung der Abreißkupplung weisenden Seite weisen eine Schrägfläche auf, über die der Rastring aushebelbar ist. Der Begriff Trennrichtung der Kupplung bezeichnet relativ von einem Kupplungselement aus gesehen diejenige Richtung, in die sich das jeweils andere Kupplungselement bewegt, wenn die Abreißkupplung trennt.

Vom ersten Kupplungselement aus gesehen weist die Trennrichtung somit in Längsrichtung der Kupplung hin zum zweiten Kupplungselement bzw. dessen Flüssigkeitsanschluss, vom zweiten Kupplungselement aus gesehen ist die Trennrichtung genau entgegengesetzt. Der Begriff Schrägfläche bezeichnet bevorzugt eine Fläche, die mit der Radialrichtung des jeweiligen Kupplungselements einen Winkel einschließt und so beim Auftreten von Zugkräften oder Kippmomenten ein Herausgleiten des Rastrings aus der entsprechenden Rastringaufnahme ermöglicht bzw. erleichtert.

Bevorzugt weisen erstes und zweites Kupplungsteil relativ zueinander ein Kippspiel auf. Dies bedeutet, dass sie (bevorzugt gegen die Kraft eines Rückstellelements wie beispielsweise einer Rückstellfeder) aus der koaxialen Ausrichtung gegeneinander um einen gewissen Winkel verkippt werden können. Ein solches geringfügiges Kippen kann das Aushebeln bzw. Herausgleiten des Rastrings aus der zugehörigen Rastringaufnahme erleichtern und stellt sicher, dass eine definierte Trennung der Abreißkupplung auch dann erfolgt, wenn ein erheblicher Teil der Trennkraft als Kippmoment quer zur Axialrichtung der Abreißkupplung wirkt. In der Praxis ist ein solches Trennen der Abreißkupplung durch quer zur Axialrichtung wirkende Kippmomente sehr häufig, da in aller Regel eine Zapfpistole quer zur Fahrtrichtung eines Fahrzeugs in den Fahrzeugtank gesteckt wird und beim Losfahren mit noch im Tank befindlicher Zapfpistole ein erheblicher Teil der auf die Abreißkupplung wirkenden Kraft quer zur Axialrichtung als Kippmoment aufgebracht wird.

Wie vorstehend bereits beschrieben, ist in der Regel zwischen Zapfpistole und Zapfschlauch einer Zapfsäule eine Dreh- oder Swivelverbindung vorgesehen, die ein unbegrenztes Verdrehen der Zapfpistole relativ zum Zapfschlauch ermöglicht. Im Rahmen der Erfindung ist es bevorzugt, wenn dieses Drehgelenk bzw. diese Swivelverbindung am ersten oder zweiten Kupplungselement angeordnet sind, also das entsprechende Kupplungselement diese Dreh- oder Swivelverbindung aufweist. Es wird so ein Verdrehen des entsprechenden Kupplungsteils relativ zu dem zugehörigen Flüssigkeitsanschluss des Kupplungsteils möglich. Bevorzugt kann eine drehbar auf dem Außenumfang eines Kupplungsteils angeordnete Swivelmutter vorgesehen sein, die den zu diesem Kupplungsteil zugehörigen Flüssigkeitsanschluss aufweist. Über diese Swivelmutter ist somit der Flüssigkeitsanschluss und somit der angeschlossene Zapfschlauch bzw. die Zapfpistole frei verdrehbar gegenüber dem anderen Kupplungsteil mit dem entsprechenden Flüssigkeitsanschluss.

Im Rahmen der Erfindung können verschiedene Maßnahmen vorgesehen sein, um eine leichte und widerstandsarme Verdrehbarkeit dieser zusätzlichen Gelenk- oder Swivelverbindung vorzusehen. Beispielsweise kann vorgesehen sein, dass der Durchmesser, auf dem die Swivelmutter angeordnet ist, möglichst gering ist, um das für das Verdrehen der Swivelmutter erforderliche Drehmoment so gering wie möglich zu halten. Auf diese Weise wird von vornherein verhindert, dass größere Drehmomente auf die Abreißkupplung (also Drehmomente relativ vom ersten zum zweiten Kupplungsteil) wirken. Ferner kann vorgesehen sein, dass die Swivelmutter beispielsweise mittels eines Gleitrings möglichst leichtgängig gegenüber dem entsprechenden Kupplungsteil verdrehbar ist.

Ein Abriss der Kupplung geschieht in der Regel zerstörungsfrei, sodass die Abreißkupplung wieder zusammengefügt und weiter verwendet werden kann. Allerdings ist vor dem Zusammenfügen eine Überprüfung der Kupplung und ihrer Bestandteile durch Fachpersonal auf Beschädigungen, Verunreinigungen und dergleichen erforderlich. Um eine unsachgemäße erneute Montage beispielsweise durch nichtautorisiertes Tankstellenpersonal zu erschweren oder unmöglich zu machen, kann vorgesehen sein, dass erstes und zweites Kupplungsteil nach einem Abriss nur mittels Spezialwerkzeug und/oder mittels hoher Fügekräfte wie beispielsweise eine Schraubstockmontage wieder zusammengefügt werden können. Beispielsweise kann ein Kupplungsteil ein Federelement wie beispielsweise ein Federbein aufweisen, das ein erneutes Zusammenfügen erschwert und nur gegen die Federwirkung eines solchen Federelements möglich macht.

Die erfindungsgemäße Abreißkupplung kann ein Schauglas zur Überprüfung des Durchflusses aufweisen, dass mit einem vom Flüssigkeitsstrom bewegbaren Propeller ausgestattet sein kann.

Gegenstand der Erfindung ist ferner eine Zapfpistole, die eine erfindungsgemäße Abreißkupplung aufweist. Ein weiterer Gegenstand der Erfindung ist eine Zapfsäule mit einer erfindungsgemäßen Zapfpistole. Zapfsäule und Zapfpistole sind in üblicher Weise durch einen Zapfschlauch verbunden. Diese Zapfsäule weist bevorzugt im Bereich des zapfschlauchseitig montierten Kupplungsteils der Abreißkupplung eine Auslaufsicherung auf. Diese verhindert, dass nach einem Abriss Flüssigkeit (Kraftstoff) aus dem abgerissenen Kupplungsteil am Zapfschlauchende ausläuft. Es kann sich beispielsweise um einen Dichtkegel handeln, der bei einem Abriss das Auslaufen von Kraftstoff verhindert und sicherstellt, dass nicht mehr als eine maximal zugelassene Restmenge von Kraftstoff (üblicherweise 120 ml) ausläuft.

Ein Ausführungsbeispiel der Erfindung wird nachfolgend anhand der Zeichnung erläutert. Darin zeigen:
Fig. 1: schematisch eine erfindungsgemäße Zapfpistole mit einer erfindungsgemäßen Abreißkupplung;
Fig. 2: eine erfindungsgemäße Abreißkupplung im Längsschnitt;
Fig. 3 und 4: die Ausgestaltung des Sicherungsringes in Querschnitten in den Ebenen A-A und B-B der Fig. 2;
Fig. 5: in einem Detail den Rastring in den Rastringaufnahmen;
Fig. 6: in einer Fig. 5 vergleichbaren Ansicht einen bei einer Abreißkupplung des Standes der Technik in eine Schrägfläche eingelaufenen Rastring (nicht erfindungsgemäß);
Fig. 7: einen Längsschnitt durch eine erfindungsgemäße Kupplung im getrennten Zustand;
Fig. 8: die Wirkung des Federelements zur Sicherung gegen unbefugtes Wiederzusammensetzen der Kupplung;
Fig. 9: einen Detailausschnitt aus Fig. 8;
Fig. 10: eine zweite Ausführungsfprm einer erfindungsgemäßen Abreißkupplung mit einem Schauglas im Längsschnitt.

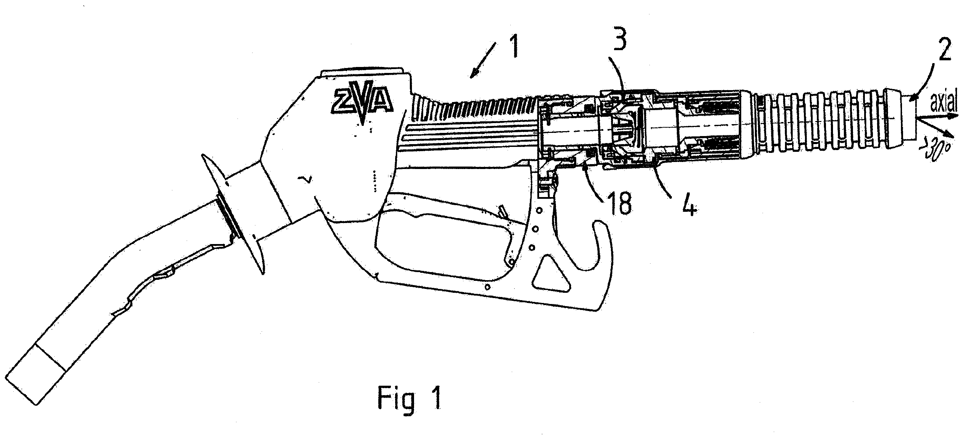

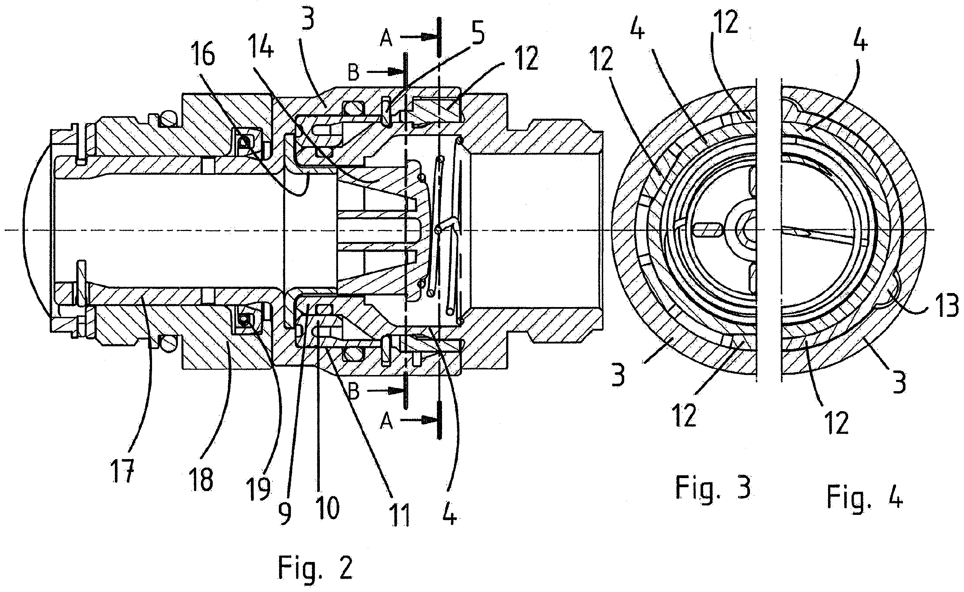

Fig.1 zeigt eine Zapfpistole 1 zum Betanken von Kraftfahrzeugen. Ein Zapfschlauch 2 verbindet die Zapfpistole 1 mit einer nicht dargestellten Zapfsäule. Die Verbindung zwischen Zapfpistole 1 und Zapfschlauch 2 wird über eine Abreißkupplung hergestellt, die ein zapfpistolenseitiges Femalekupplungselement 3 und ein zapfschlauchseitiges Malekupplungselement 4 aufweist (siehe Fig. 2).

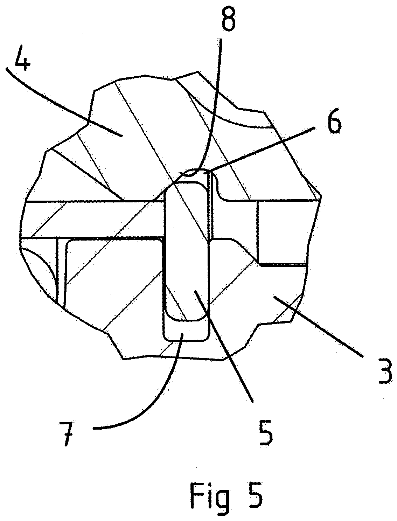

Fig. 2 zeigt die beiden Kupplungselemente 3,4 in zusammengefügtem Zustand. Die beiden Kupplungsteile sind gegen axiales Trennen gesichert durch einen Rastring 5, der in eine erste Rastringaufnahme 6 des Malekupplungsteils 4 und eine zweite Rastringaufnahme 7 des Femalekupplungsteils 3 eingreift (siehe Fig. 5). Die erste Rastringaufnahme 6 weist an ihrer in Trennrichtung der Abreißkupplung (also in der Richtung, in der das Malekupplungselement 4 aus dem Femalekupplungselement 3 herausgezogen werden kann) eine zur Radialrichtung der Kupplung geneigte Schrägfläche 8 auf. Diese Schrägfläche 8 erleichtert das Herausgleiten des Rastrings 5 aus der Rastringaufnahme 6, wenn auf das Malekupplungselement 4 relativ zum Femalekupplungselement 3 eine Zugkraft aufgebracht wird oder ein Kippmoment einwirkt.

In Fig. 2 ist zu erkennen, dass Malekupplungselement 4 und Femalekupplungselement 3 zueinander ein Kippspiel aufweisen. Sobald diese beiden Kupplungselemente 3,4 gegeneinander verkippt werden, geschieht dies gegen die Rückstellkraft der ringförmig den Endbereich 9 des Kupplungselements 4 umschließenden Rückstellfeder 10, die sich gegen eine Innenfläche 11 des Femalekupplungselements 3 abstützt. Die Rückstellfeder 10 trachtet danach, Male- und Femalekupplungselemente 3,4 exakt koaxial zueinander auszurichten.

Konzentrisch zwischen Male- und Femalekupplungselementen 3,4 ist ein Sicherungsring 12 eingefügt. Die Figuren 3 und 4 stellen ihn in den beiden Schnittebenen A-A und B-B der Fig. 2 dar. Man erkennt, wie der Sicherungsring 12 in der Ebene A-A mittels bei 13 angedeuteten formschlüssig miteinander zusammenwirkenden Stegen auf dem Sicherungsring 12 und zugehörigen Aussparungen im Femalekupplungselement 3 eine Verdrehsicherung bildet. In Fig. 3 (Schnitt B-B) erkennt man, wie der Sicherungsring 12 in diesem Bereich formschlüssig mit dem Malekupplungselement 4 zusammenwirkt, um es an einem Verdrehen zu hindern. Im Ergebnis werden auf diese Weise Malekupplungselement 4 und Femalekupplungselement 3 relativ zueinander gegen ein Verdrehen gesichert.

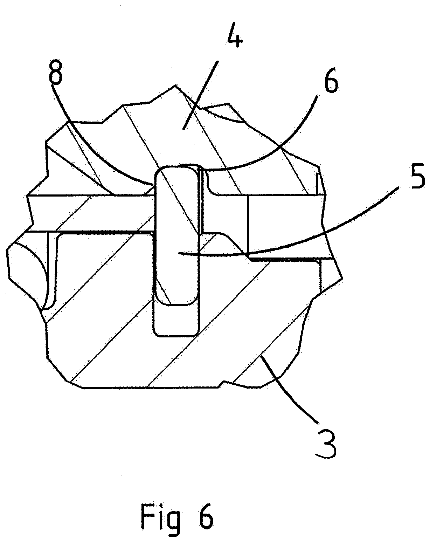

Diese Sicherung gegen ein Verdrehen bewirkt, dass der Rastring 5 nicht auf der Schrägfläche 8 einlaufen kann. Fig. 6 (nicht erfindungsgemäß) zeigt, wie bei einer Abreißkupplung des Standes der Technik durch ein unbeabsichtigtes Verdrehen der Kupplungselemente 3,4 gegeneinander eine Kante des Rastrings 5 in die Schrägfläche 8 einlaufen und diese einkerben kann. Es ist jetzt eine deutlich höhere Kraft erforderlich, um den Rastring 5 über die Schrägfläche 8 aus der Ausnehmung 6 auszuhebeln bzw. daraus herauszuziehen. Die Abreißkupplung arbeitet nicht mehr mit der gewünschten definierten Abreißkraft.

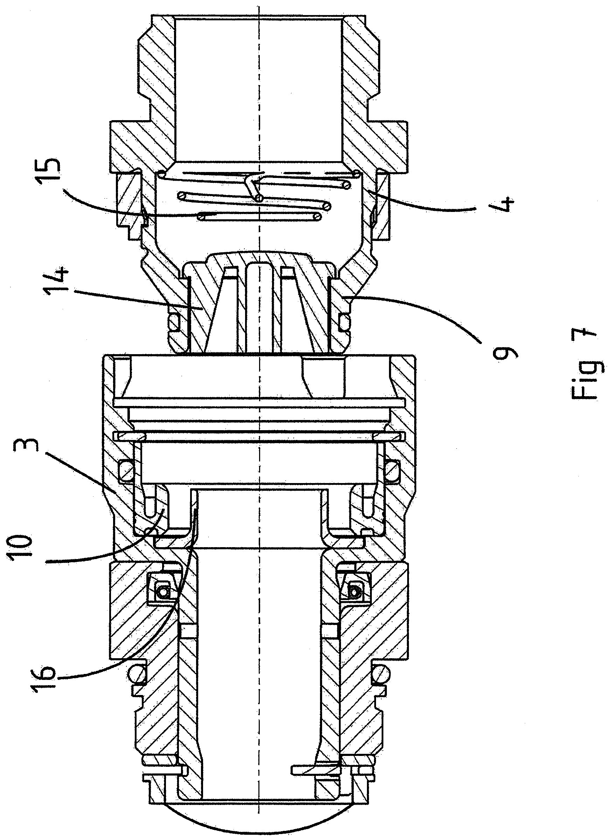

Das Malekupplungselement 4 weist im Inneren einen Ventilkegel 14 auf, der im getrennten Zustand der Abreißkupplung (Fig. 7) das kupplungsseitige Ende des Malekupplungselements 4 flüssigkeitsdicht verschließt. Er wird von einer bei 15 angedeuteten Feder sowie vom Flüssigkeitsdruck im Füllschlauch 2 in die Schließstellung vorgespannt. Im zusammengesetzten Zustand der Abreißkupplung wird der Ventilkegel 14 durch ein an die Stirnseite des Ventilkegels 14 anschlagendes Ringelement 16 im Femalekupplungselement 3 in eine geöffnete Stellung gedrängt (siehe Fig. 2).

Auf dem zapfpistolenseitigen Ende 17 des Femalekupplungselements 3 ist eine Swivelmutter 18 frei drehbar gelagert. Ein leitfähiger Gleitring 19 stellt eine leichtgängige freie Verdrehbarkeit und Leitfähigkeit sicher und bewirkt so, dass kein oder allenfalls ein geringes Drehmoment auf das Femalekupplungselement 3 relativ zum Malekupplungselement 4 einwirkt. Wie in Fig. 1 zu erkennen, umgreift der Anschluss der Zapfpistole 1 die Swivelmutter 18 radial von außen, sodass mittels der Swivelmutter 18 die Zapfpistole 1 gegenüber dem Zapfschlauch 2 frei verdrehbar ist.

Wird nach dem Betanken eines Fahrzeugs das Herausnehmen der Zapfpistole 1 vergessen und verbleibt diese im Einfüllstutzen des Fahrzeugs, wird beim Losfahren auf die Abreißkupplung eine Zugkraft und/oder ein Kippmoment ausgeübt. Üblicherweise wird dabei das Malekupplungselement 4 relativ zum Femalekupplungselement 3 verkantet bzw. verkippt und der Rastring 5 gleitet entlang der Schrägfläche 8 aus der Rastringaufnahme 6 heraus, sodass sich Male- und Femalekupplungselemente 3,4 voneinander trennen. Die Kupplung ist so definiert, dass die erforderlichen Trennkräfte geringer sind als diejenigen Kräfte, die bei den übrigen Bestandteilen der Zapfsäule (Schlauch, Säulenfundament oder dergleichen) Beschädigungen auslösen können. Übliche Trennkräfte können beispielsweise zwischen 800 und 1500 N liegen. Nach dem Abreißen schließt der Ventilkegel 14 und verhindert ein Auslaufen des Füllschlauches 2.

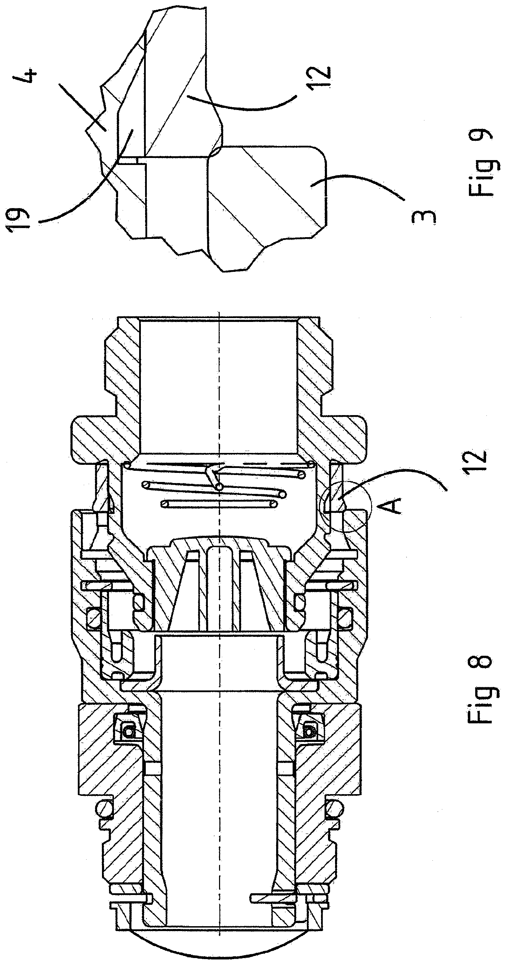

Nach einem Abreißvorgang muss die Abreißkupplung auf Beschädigungen und Verunreinigungen geprüft werden und kann anschließend wieder zusammengesetzt werden. In den Figuren 8 und 9 ist zu erkennen, wie eine spezielle Ausgestaltung des Sicherungsrings 12 ein Wiederzusammenfügen der Abreißkupplung nach einem Abriss durch unautorisiertes Personal verhindern oder zumindest erschweren kann. Wie insbesondere der Detailausschnitt der Fig. 9 zeigt, weist das dem Femalekupplungselement 3 zugewandte Ende des Sicherungsrings 12 ein leichtes radiales Übermaß auf, das ein Zusammenfügen von Malekupplungselement 4 und Femalekupplungselement 3 erschwert. Nur durch Aufbringen einer hohen in Axialrichtung wirkenden Kraft (beispielsweise eine Schraubstockmontage) können die Kupplungselemente 3,4 wieder zusammengefügt werden. Dabei wird das in Fig. 9 gezeigte radiale Übermaß temporär dadurch überwunden, dass das gezeigte Ende des Sicherungsrings 12 in die Ausnehmung 19 des Malekupplungselements 4 hinein gedrückt wird.

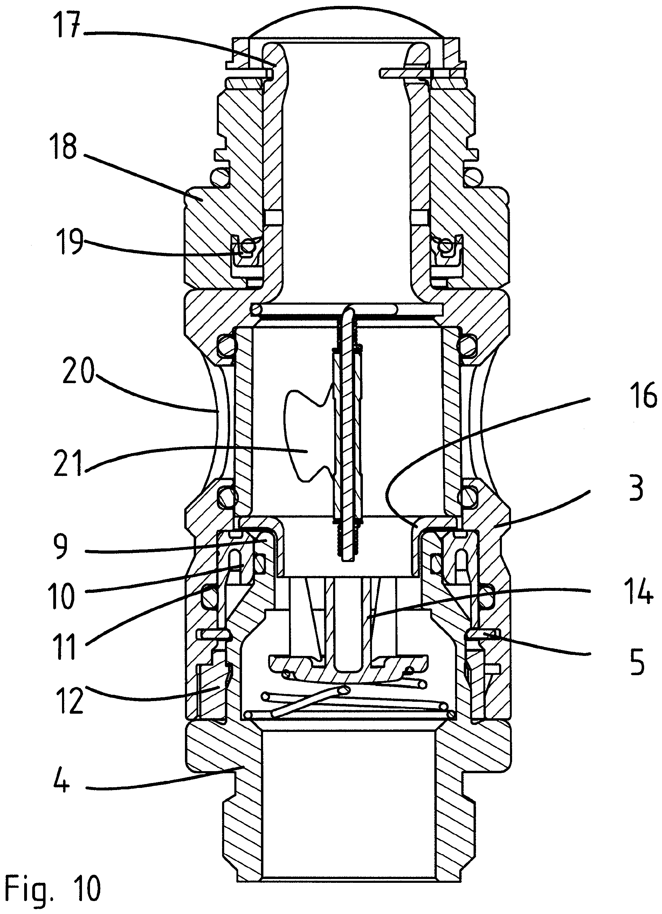

Figur 10 zeigt eine zweite Ausführungsform der Erfindung. Die hier dargestellte Abreißkupplung entspricht weitgehend der in Figur 2 dargestellten Ausführungsform, identische Bezugsziffern bezeichnen identische Bauteile. Bei dieser Ausführungsform ist ein Schauglas 20 vorgesehen, dass vom Außenumfang her einen Blick auf durchströmende Flüssigkeit gestattet und so insbesondere zur Kontrolle des blasenfreien Zapfens geeignet ist. Ein vom Flüssigkeitsstrom angetriebener Propeller 21 erlaubt eine verbesserte optische Kontrolle des Zapfvorgangs.

## Patentansprüche

1. Abreißkupplung für eine Flüssigkeitsleitung, mit einem ersten und einem zweiten Kupplungsteil (4,3), die jeweils einen Flüssigkeitsanschluss aufweisen und die durch eine definierte Kraft in Axialrichtung der Kupplung und/oder ein quer zur Axialrichtung wirkendes definiertes Kippmoment trennbar sind, wobei der erste Kupplungsteil als Male-Kupplungsteil (4) und der zweite Kupplungsteil als Female-Kupplungsteil (3) ausgebildet ist und wobei der erste und zweite Kupplungsteil (4, 3) im zusammengesetzten Zustand der Kupplung ineinander greifen, wobei eine Verdrehsicherung (12) vorgesehen ist, die im zusammengesetzten Zustand der Kupplung ein Verdrehen von erstem und zweitem Kupplungsteil (4,3) gegeneinander um eine Axialrichtung der Kupplung verhindert, **dadurch gekennzeichnet, dass** die Verdrehsicherung (12) einen in Umfangsrichtung konzentrisch zwischen erstem und zweitem Kupplungsteil (4, 3) angeordneten nicht rotationssymmetrischen Sicherungsring umfasst, wobei die Verdrehsicherung (12) durch Formschluss zwischen Sicherungsring und jedem der beiden Kupplungsteile (3, 4) gebildet wird.

2. Abreißkupplung nach Anspruch 1, **dadurch gekennzeichnet, dass** sie einen Rastring (5) aufweist, der in eine erste Rastringaufnahme (6) des ersten Kupplungsteils (4) und eine zweite Rastringaufnahme (7) des zweiten Kupplungsteils (3) eingreift und durch eine definierte Kraft in Axialrichtung der Kupplung und/oder ein quer zur Axialrichtung wirkendes Kippmoment ausrastbar ist.

3. Abreißkupplung nach Anspruch 2, **dadurch gekennzeichnet, dass** der Rastring (5) an seiner von der Trennrichtung der Abreißkupplung wegweisenden Seite oder die erste und/oder zweite Rastringaufnahme an ihrer in Trennrichtung der Abreißkupplung weisenden Seite eine Schrägfläche (8) aufweisen, über die der Rastring aushebelbar ist.

4. Abreißkupplung nach einem der Ansprüche 1 bis 3, **dadurch gekennzeichnet, dass** erstes und zweites Kupplungsteil (4,3) zueinander ein Kippspiel aufweisen.

5. Abreißkupplung nach Anspruch 4, **dadurch gekennzeichnet, dass** ein Rückstellelement (10) vorgesehen ist, das erstes und zweites Kupplungsteil koaxial zueinander ausrichtet.

6. Abreißkupplung nach einem der Ansprüche 1 bis 5, **dadurch gekennzeichnet, dass** das erste und/oder zweite Kupplungselement (4,3) ein Drehgelenk (18) aufweisen, das ein Verdrehen des Kupplungsteils relativ zu dem zugehörigen Flüssigkeitsanschluss erlaubt.

7. Abreißkupplung nach Anspruch 6, **dadurch gekennzeichnet, dass** eine drehbar auf dem Außenumfang eines Kupplungsteil angeordnete Swivelmutter (18) vorgesehen ist, die den zu diesem Kupplungsteil zugehörigen Flüssigkeitsanschluss aufweist.

8. Abreißkupplung nach Anspruch 7, **dadurch gekennzeichnet, dass** zwischen Swivelmutter (18) und Kupplungsteil (3) ein leitfähiger Gleitring (19) angeordnet ist.

9. Abreißkupplung nach einem der Ansprüche 1 bis 8, **dadurch gekennzeichnet, dass** erstes und zweites Kupplungsteil (4,3) nach einem Abriss nur mittels einer Vorrichtung wie z. B. einer Schraubstockmontage wieder zusammenfügbar sind.

10. Abreißkupplung nach einem der Ansprüche 1 bis 9, **dadurch gekennzeichnet, dass** sie ein Schauglas (20) aufweist.

11. Zapfpistole, **dadurch gekennzeichnet, dass** sie eine Abreißkupplung nach einem der Ansprüche 1 bis 10 aufweist.

12. Zapfsäule, **dadurch gekennzeichnet, dass** sie eine Zapfpistole nach Anspruch 11 aufweist, wobei sie vorzugsweise im Bereich des zapfschlauchseitig montierten Kupplungsteils eine Auslaufsicherung (14) aufweist.

## Claims

1. Breakaway coupling for a liquid line, having a first and a second coupling part (4, 3) which each have a liquid connection and which are separable by a defined force in the axial direction of the coupling and/or by a defined tilting moment acting transversely to the axial direction, wherein the first coupling part is configured as a male coupling part (4) and the second coupling part is configured as a female coupling part (3) and wherein the first and second coupling parts (4, 3) engage in one another in the assembled state of the coupling, wherein an anti-rotation means (12) is provided which prevents rotation of the first and second coupling parts (4, 3) with respect to one another about an axial direction of the coupling in the assembled state of the coupling, **characterized in that** the anti-rotation means (12) comprises a non-rotationally symmetrical locking ring which is arranged concentrically in the circumferential direction between the first and second coupling parts (4, 3), wherein the anti-rotation means (12) is formed by way of a form fit between locking ring and each of the two coupling parts (3, 4).

2. Breakaway coupling according to Claim 1, **characterized in that** it has a latching ring (5) which engages in a first latching ring receptacle (6) of the first coupling part (4) and a second latching ring receptacle (7) of the second coupling part (3) and is unlatchable by a defined force in the axial direction of the coupling and/or by a tilting moment acting transversely to the axial direction.

3. Breakaway coupling according to Claim 2, **characterized in that** the latching ring (5) has an inclined surface (8) on its side facing away from the separating direction of the breakaway coupling or the first and/or second latching ring receptacle has/have an inclined surface (8) on their side facing in the separating direction of the breakaway coupling, the latching ring being able to be levered out via said inclined surface (8).

4. Breakaway coupling according to one of Claims 1 to 3, **characterized in that** the first and second coupling parts (4, 3) have tilting play with respect to one another.

5. Breakaway coupling according to Claim 4, **characterized in that** a restoring element (10) is provided which orients the first and second coupling parts in a coaxial manner with respect to one another.

6. Breakaway coupling according to one of Claims 1 to 5, **characterized in that** the first and/or second coupling element (4, 3) has/have a rotary joint (18) which allows the coupling part to rotate relative to the associated liquid connection.

7. Breakaway coupling according to Claim 6, **characterized in that** a swivel nut (18) which is arranged in a rotatable manner on the outer circumference of a coupling part is provided, said swivel nut (18) having the liquid connection associated with this coupling part.

8. Breakaway coupling according to Claim 7, **characterized in that** a conductive slip ring (19) is arranged between the swivel nut (18) and the coupling part (3).

9. Breakaway coupling according to one of Claims 1 to 8, **characterized in that** the first and second coupling parts (4, 3) are able to be joined together again following a breakaway only by means of a device, such as vise mounting, for example.

10. Breakaway coupling according to one of Claims 1 to 9, **characterized in that** it has an inspection window (20).

11. Fuel nozzle, **characterized in that** it has a breakaway coupling according to one of Claims 1 to 10.

12. Fuel dispenser, **characterized in that** it has a fuel nozzle according to Claim 11, wherein it has a leak-prevention means (14) preferably in the region of the coupling part mounted on the delivery-hose side.

## Revendications

1. Accouplement déchirable, pour une conduite de liquide, comprenant une première et une deuxième partie d'accouplement (4, 3) qui présentent chacune un raccord de liquide et qui peuvent être séparées par une force définie dans la direction axiale de l'accouplement et/ou par un couple de basculement défini agissant transversalement à la direction axiale, la première partie d'accouplement étant réalisée sous forme de partie d'accouplement mâle (4) et la deuxième partie d'accouplement étant réalisée sous forme de partie d'accouplement femelle (3) et la première et la deuxième partie d'accouplement (4, 3), dans l'état assemblé de l'accouplement, s'engageant l'une dans l'autre, une fixation antirotation (12) étant prévue, laquelle, dans l'état assemblé de l'accouplement, empêche une rotation de la première et de la deuxième partie d'accouplement (4, 3) l'une par rapport à l'autre autour d'une direction axiale de l'accouplement, **caractérisé en ce que** la fixation antirotation (12) comprend une bague de fixation sans symétrie de révolution disposée dans la direction périphérique concentriquement entre la première et la deuxième partie d'accouplement (4, 3), la fixation antirotation (12) étant formée par engagement positif entre la bague de fixation et chacune des deux parties d'accouplement (3, 4).

2. Accouplement déchirable selon la revendication 1, **caractérisé en ce qu'**il présente une bague d'encliquetage (5) qui s'engage dans un premier logement de bague d'encliquetage (6) de la première partie d'accouplement (4) et dans un deuxième logement de bague d'encliquetage (7) de la deuxième partie d'accouplement (3) et qui peut être désencliquetée par une force définie dans la direction axiale de l'accouplement et/ou par un couple de basculement agissant transversalement à la direction axiale.

3. Accouplement déchirable selon la revendication 2, **caractérisé en ce que** la bague d'encliquetage (5) présente, sur son côté opposé à la direction de séparation de l'accouplement déchirable, ou le premier et/ou le deuxième logement de bague d'encliquetage présentent, au niveau de leur côté orienté dans la direction de séparation de l'accouplement déchirable, une surface oblique (8) par le biais de laquelle la bague d'encliquetage peut être sortie par effet de levier.

4. Accouplement déchirable selon l'une quelconque des revendications 1 à 3, **caractérisé en ce que** la première et la deuxième partie d'accouplement (4, 3) présentent un jeu de basculement l'une par rapport à l'autre.

5. Accouplement déchirable selon la revendication 4, **caractérisé en ce qu'**un élément de rappel (10) est prévu, lequel oriente la première et la deuxième partie d'accouplement coaxialement l'une par rapport à l'autre.

6. Accouplement déchirable selon l'une quelconque des revendications 1 à 5, **caractérisé en ce que** le premier et/ou le deuxième élément d'accouplement (4, 3) présente une articulation pivotante (18) qui permet une rotation de la partie d'accouplement par rapport au raccord de liquide associé.

7. Accouplement déchirable selon la revendication 6, **caractérisé en ce qu'**un écrou pivotant (18) disposée de manière rotative sur la périphérie extérieure d'une partie d'accouplement est prévu, lequel présente le raccord de liquide associé à cette partie d'accouplement.

8. Accouplement déchirable selon la revendication 7, **caractérisé en ce qu'**entre l'écrou pivotant (18) et la partie d'accouplement (3) est disposée une bague coulissante conductrice (19).

9. Accouplement déchirable selon l'une quelconque des revendications 1 à 8, **caractérisé en ce que** la première et la deuxième partie d'accouplement (4, 3), après avoir été déchirées peuvent seulement être à nouveau assemblées au moyen d'un dispositif tel que par exemple un montage sur étau.

10. Accouplement déchirable selon l'une quelconque des revendications 1 à 9, **caractérisé en ce qu'**il présente un verre-regard (20).

11. Pistolet de remplissage, **caractérisé en ce qu'**il présente un accouplement déchirable selon l'une quelconque des revendications 1 à 10.

12. Distributeur de remplissage, **caractérisé en ce qu'**il présente un pistolet de remplissage selon la revendication 11, le distributeur présentant de préférence une fixation de sortie (14) dans la zone de la partie d'accouplement montée du côté du tuyau de remplissage.
